# EUROPEAN PATENT SPECIFICATION

(11) **EP 2 326 859 B1**
(45) Date of publication and mention of the grant of the patent: **03.10.2012**
(21) Application number: 09791436.0
(22) Date of filing: 12.08.2009
(51) Int. Cl.: F16K 11/22, F17C 13/04

(54) **VALVE ASSEMBLIES**
VENTILANORDNUNGEN
ENSEMBLES VALVES

(30) Priority: 18.08.2008 US 89730 P
(43) Date of publication of application: 01.06.2011
(73) Proprietor: Sigma-Aldrich Co., St Louis, Missouri 63103 (US)
(72) Inventor: HUBSCH, Roland, 70565 Stuttgart (DE); RIEBENSTAHL, Hubert, 89555 Steinheim (DE)
(74) Representative: Brown, David Leslie
(86) International application number: PCT/US2009/053587
(87) International publication number: WO 2010/021891

(56) References cited:
- EP-A2- 0 288 931
- WO-A1-2005/066535
- US-A- 4 293 009

## Description

### CROSS-REFERENCE TO RELATED APPLICATION

This application claims the benefit of U.S. Provisional Application No. 61/089,730, filed on August 18, 2008.

### FIELD

The present disclosure generally relates to valve assemblies, and more particularly to valve assemblies for use in filling and/or refilling containers with liquids, and for use in withdrawing vapor products from the liquids within the containers.

### BACKGROUND

This section provides background information related to the present disclosure which is not necessarily prior art.

Valve assemblies are often used to transfer products between locations. For example, valve assemblies may be used to withdraw liquids from containers such that they may be used at secondary locations. Alternatively, valve assemblies may be used to withdraw vapor products associated with the liquids from the containers such that they may be used at secondary locations. However, once the liquids in the containers are depleted, the containers and valve assemblies are discarded or the valve assemblies are removed from the containers so that liquid can be refilled into the containers.
WO 2005/066535 (Ata et al.) describes a fluid coupling and coupling-unitized type integration unit for attachment to a tank. The unit allows for putting fluids into the tank and for taking fluids out of the tank. Individual valve structures are coupled to the unit for separately controlling movement of the fluids.
EP 0 288 931 (Tom) describes a valve block leak-tightly joinable to a receptacle to form a container suitable for liquid storage/vapor dispensing. The valve block includes first and second valves that, together, are operated to control movement of feed gas through the valve block and container. In one embodiment the valve block includes a loading port that can be opened and closed to selectively allow liquid to be introduced into the receptacle of the container.

### SUMMARY

The present invention is defined in and by the appended claims.

This section provides a general summary of the disclosure, and is not a comprehensive disclosure of its full scope or all of its features.

Various aspects of the present disclosure generally relate to valve assemblies that can be releasably coupled to containers. The valve assemblies are operable to fill and/or refill the containers with, liquids while venting excess vapors from the containers associated with the liquids to relieve pressure in the containers created by the liquids. The valve assemblies are also operable to introduce carrier gases into the containers for use in retrieving vapor products from the liquids within the containers.

The valve assembly generally includes a housing and two or more valve spools disposed at least partly within the housing. The two or more valve spools are independently moveable relative to the housing to control movement through the housing of a liquid, excess vapor associated with the liquid, a carrier gas, and a vapor product retrieved by the carrier gas.

In another exemplary embodiment, a valve assembly for coupling to a container and controlling movement of fluids into and/or out of the container generally includes a housing and means for removably coupling the housing to a container. In this embodiment, first and second longitudinal bores are defined by the housing, each having a longitudinal axis. In addition, first and second liquid ports are defined by the housing and in communication with the first bore; first and second excess vapor ports defined by the housing and in communication with the first bore; first and second carrier gas ports defined by the housing and in communication with the second bore; and first and second vapor product ports defined by the housing and in communication with the second bore. A first valve spool is disposed at least partly within the first bore for use in controlling movement of fluids through the first bore, and a second valve spool is disposed at least partly within the second bore for use in controlling movement of fluids through the second bore. A first actuator is coupled to the first valve spool for sliding the first valve spool within the first bore in a direction generally parallel to the longitudinal axis of the fist bore, and a second actuator is coupled to the second valve spool for sliding the second valve spool within the second bore in a direction generally parallel to the longitudinal axis of the second bore.

Other various aspects of the present disclosure generally relate to methods for filling and/or refilling liquid into a container and transporting vapor products retrieved from the liquid out of the container while reducing risks of contaminating the liquid and/or exposing the liquid to the atmosphere during operation. The method includes removably coupling a valve assembly to a container, filling and/or refilling liquid into the container through the valve assembly, and transporting vapor products retrieved from the liquid in the container through the valve assembly for discharge from the valve assembly. The actions of filling and/or refilling liquid into the container and transporting vapor products retrieved from the liquid in the container can be sequentially done without uncoupling the valve assembly from the container between said actions.

Further areas of applicability will become apparent from the description provided herein. The description and specific examples in this summary are intended for purposes of illustration only and are not intended to limit the scope of the present disclosure.

### DRAWINGS

The drawings described herein are for illustrative purposes only of selected embodiments and not all possible implementations, and are not intended to limit the scope of the present disclosure.

FIG. 1 is a perspective view of a valve assembly according to one exemplary embodiment of the present disclosure with the valve assembly shown coupled to a container;

FIG. 2 is a perspective view similar to FIG. 1 with the valve assembly shown uncoupled from the container and the container removed;

FIG. 3 is a side elevation view of the valve assembly of FIG. 2;

FIG. 4 is a top plan view of the valve assembly of FIG. 2;

FIG. 5 is a bottom plan view of the valve assembly of FIG. 2 with a sparging tube removed and a receiving tube removed;

FIG. 6 is a section view taken in a plane including line 6-6 in FIG. 4 illustrating a first valve spool of the valve assembly in a generally open position;

FIG. 7 is a section view taken in a plane including line 7-7 in FIG. 4 illustrating a second valve spool of the valve assembly in a generally open position;

FIG. 8 is a section view similar to FIG. 6 illustrating the first valve spool in a generally closed position; and

FIG. 9 is a section view similar to FIG. 7 illustrating the second valve spool in a generally closed position.

Corresponding reference numerals indicate corresponding parts throughout the several views of the drawings.

### DETAILED DESCRIPTION

Exemplary embodiments will now be described more fully with reference to the accompanying drawings.

Exemplary embodiments are provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

The terminology used herein is for the purpose of describing particular example embodiments only and is not intended to be limiting. As used herein, the singular forms "a", "an" and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on", "engaged to", "connected to" or "coupled to" another element or layer, it may be directly on, engaged, connected or coupled to the other element or layer, or intervening elements or layers may be present. In contrast, when an element is referred to as being "directly on," "directly engaged to", "directly connected to" or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Spatially relative terms, such as "inner," "outer," "beneath", "below", "lower", "above", "upper" and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

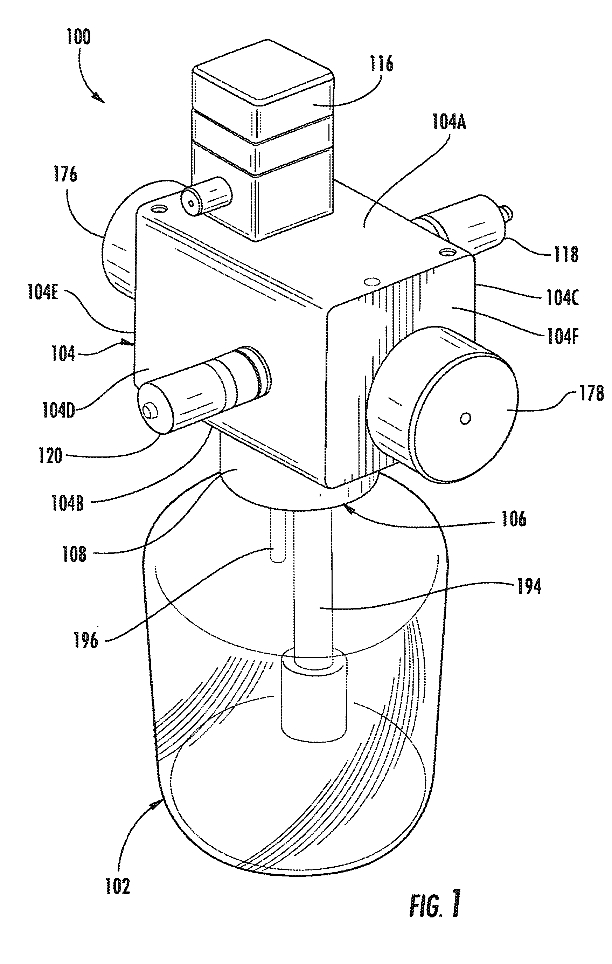

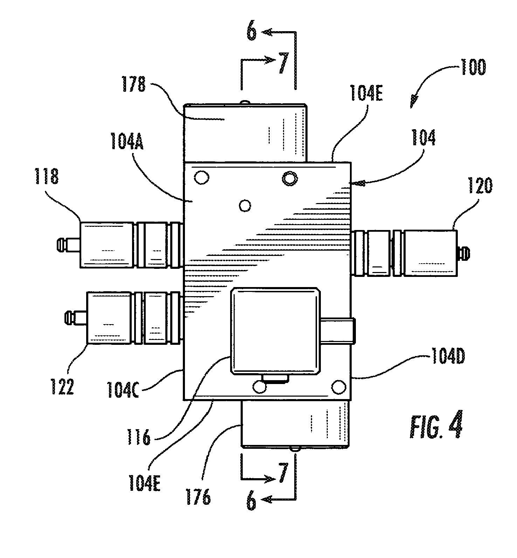

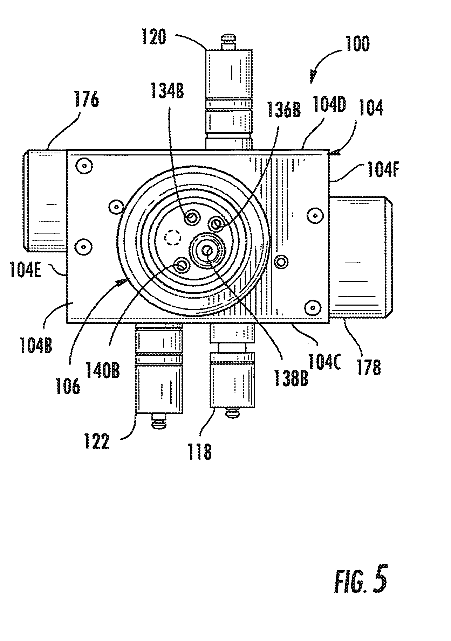

With reference now to the drawings, FIGS. 1-9 illustrate an exemplary embodiment of a valve assembly 100 embodying one or more aspects of the present disclosure. As shown in FIG. 1, the valve assembly 100 is configured (e.g., sized, shaped, constructed, etc.) to be coupled to a container 102 for operation to fill and/or refill the container 102 with a liquid, to vent excess vapor from the container 102 associated with the liquid (e.g., to relieve vapor pressure in the container 102 created when filling and/or refilling the container 102 with the liquid, etc.), to introduce a carrier gas into the container 102 to retrieve one or more vapor products from the container 102 associated with the liquid, to transport the one or more vapor products retrieved from the liquid by the carrier gas out of the container 102, etc. The liquid may include, for example, phosphorus tetrachloride (POCL), and the carrier gas may include, for example, nitrogen for retrieving one or more vapor products associated with POCL for subsequent use (e.g., in semiconductor manufacture operations, etc.). Other liquids and/or carrier gasses may be used within the scope of the present disclosure.

The illustrated container 102 is formed from a glass material (e.g., an inert glass material, etc.) and includes an open-mouth construction. In other exemplary embodiments, containers may be formed from materials other than glass (e.g., stainless steel, inert materials, etc.) and may include other than open-mouth constructions.

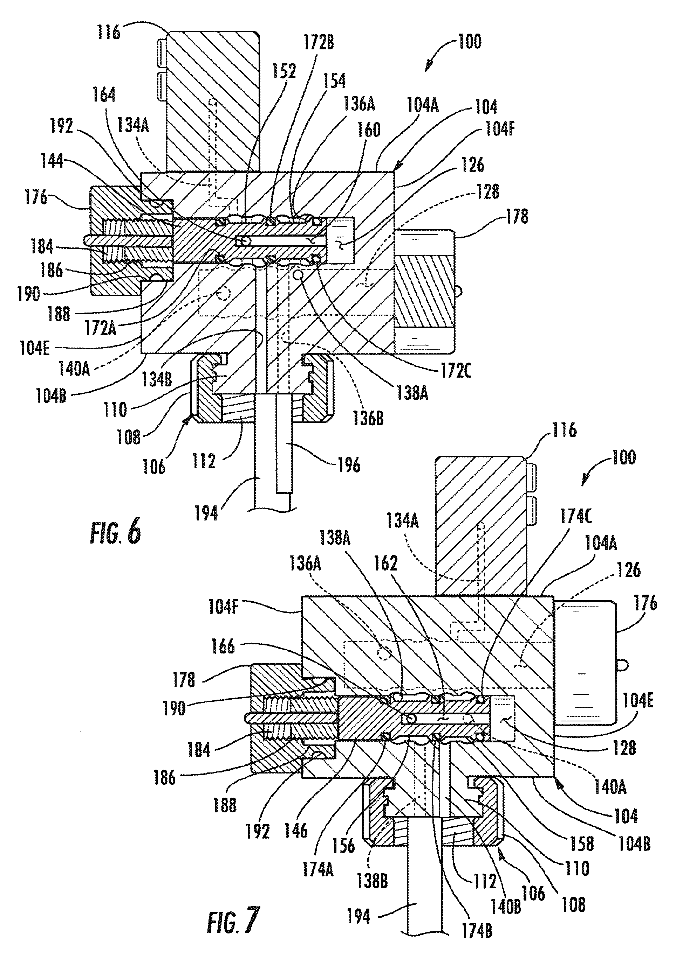

The illustrated valve assembly 100 includes a generally square-shaped housing 104 (also, valve block, body, etc.). A connector 106 is located generally on a lower surface 104B of the housing 104 for releasably, removably, etc. coupling the housing 104 (and valve assembly 100) to the container 102. The connector 106 includes a union nut 108 fixedly coupled (e.g., press fit, overmolded, etc.) to the housing 104 at a cylindrical fitting 110 of the housing 104 (e.g., FIGS. 6-9, etc.). The union nut 108 includes interior threads 112 (e.g., FIGS. 6-9, etc.) configured (e.g., sized, shaped, constructed, etc.) to be screwed onto a correspondingly threaded collar (not visible) formed on the open mouth of the container 102. The interior threads 112 of the union nut 108 may include, for example, right-handed threads for screwing the connector 106 onto corresponding external right-handed threads on the open mouth of the container 102. Once coupled to the container 102, the valve assembly 100 may be uncoupled from the container 102 by, for example, unscrewing the connector 106 from the container 102. An O-ring (not shown) may be provided within the connector 106 to help seal the connection of the valve assembly 100 to the container 102. In other exemplary embodiments, housings may be releasably, removably, etc. coupled to containers by, for example, quick release connectors, press-fit connectors, friction fit connectors, etc.

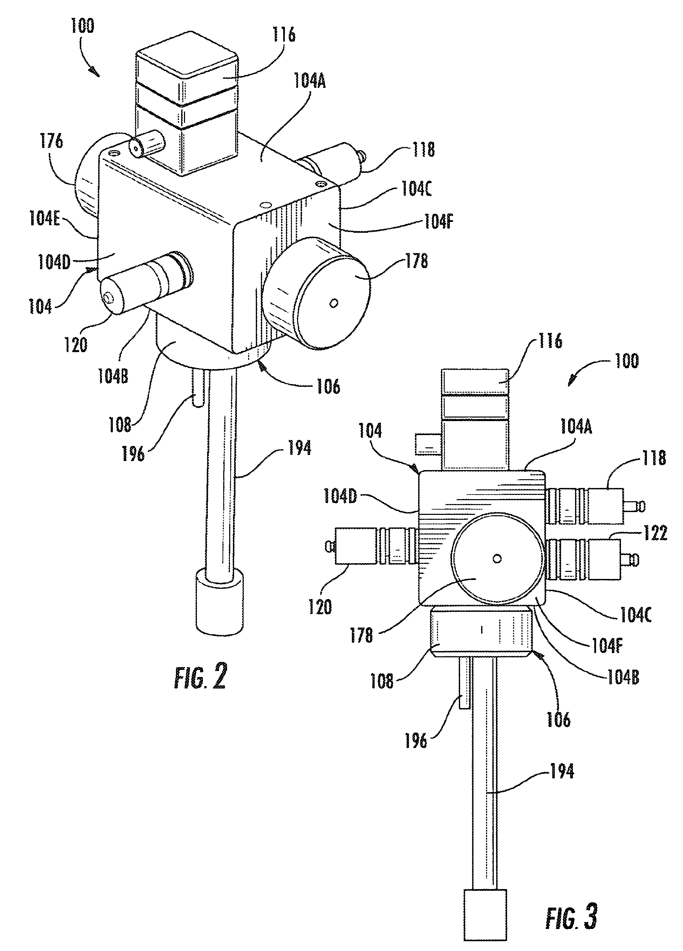

As shown in FIGS. 2-5, multiple valve structures (or fittings) 116, 118, 120, and 122 (valve structure 122 is not visible in FIG. 2) are coupled to the housing 104 for help in filling the container 102 with fluids, refilling the container 102 with fluids, introducing fluids into the container 102, removing fluids from the container 102, etc. For example, the valve structures 116, 118, 120, and 122 may facilitate connection of fluid supply lines (not shown) and/or fluid withdrawal lines (not shown) to the housing 104 for use in such operations. In the illustrated embodiment, four valve structures 116, 118, 120, and 122 are shown coupled to the housing 104, including a first valve structure 116 coupled to an upper surface 104A of the housing 104, a second valve structure 118 coupled to a first side surface 104C of the housing 104, a third valve structure 120 coupled to a second side surface 104D of the housing 104, and a fourth valve structure 122 coupled to the first side surface 104C of the housing 104. As used herein, fluids may include, for example, liquids, gasses, etc. within the scope of the present disclosure.

With further reference now to FIGS. 6-9, the housing 104 includes first and second bores 126 and 128 defined in the housing 104. The bores 126 and 128 are each generally tubular in shape and each includes a longitudinal axis. The first and second bores 126 and 128 are oriented within the housing 104 such that their longitudinal axes are generally parallel. In addition, the bores 126 and 128 are spaced apart from each other within the housing 104 in a generally vertical direction as well as a generally lateral direction.

The housing 104 also includes multiple ports 134A, 134B, 136A, 136B, 138A, 138B, 140A, and 140B defined in the housing 104 for receiving fluids into the housing 104, for transporting fluids through the housing 104, for discharging fluids from the housing 104, etc. In the illustrated embodiment, for example, the housing 104 defines eight ports 134A, 134B, 136A, 136B, 138A, 138B, 140A, and 140B, including first, second, third, and fourth upper ports 134A, 136A, 138A, and 140A, and first, second, third, and fourth lower ports 134B, 136B, 138B, and 140B.

The eight ports 134A, 134B, 136A, 136B, 138A, 138B, 140A, and 140B each extend at least partly through the housing 104 and are in general communication with one of the first and second bores 126 and 128. For example, the first and second upper and lower ports 134A, 134B, 136A, and 136B are each in fluid communication with the first bore 126, and the third and fourth upper and lower ports 138A, 138B, 140A, and 140B are each in fluid communication with the second bore 128. In addition, the first upper port 134A is defined at least partly in the upper surface of the housing 104 with the first valve structure 116 coupled (e.g., threaded, etc.) thereto. The second and fourth upper ports 136A and 140A are defined at least partly in the first side surface 104C of the housing 104 with the second and fourth valve structures 118 and 122 (respectively) coupled (e.g., threaded, etc.) thereto. And the third upper port 138A is defined at least partly in the second side surface 104D of the housing 104 with the third valve structure 120 coupled (e.g., threaded, etc.) thereto. The first, second, third, and fourth lower ports 134B, 136B, 138B, and 140B are defined at least partly in the lower surface 104B of the housing 104 such that ends thereof are generally located within the connector 106.

With continued reference to FIGS. 6-9, first and second valve spools 144 and 146 are received at least partly within the respective first and second bores 126 and 128. The first and second valve spools 144 and 146 are each elongate and generally cylindrical in shape, and each generally correspond to the shape of the respective bore 126 and 128 in which they are received. The first and second valve spools 144 and 146 are thus generally received in the housing 104 such that their longitudinal axes are generally parallel. In other exemplary embodiments, valve assemblies may include three or more valve spools disposed at least partly within corresponding bores defined by housings of the valve assemblies.

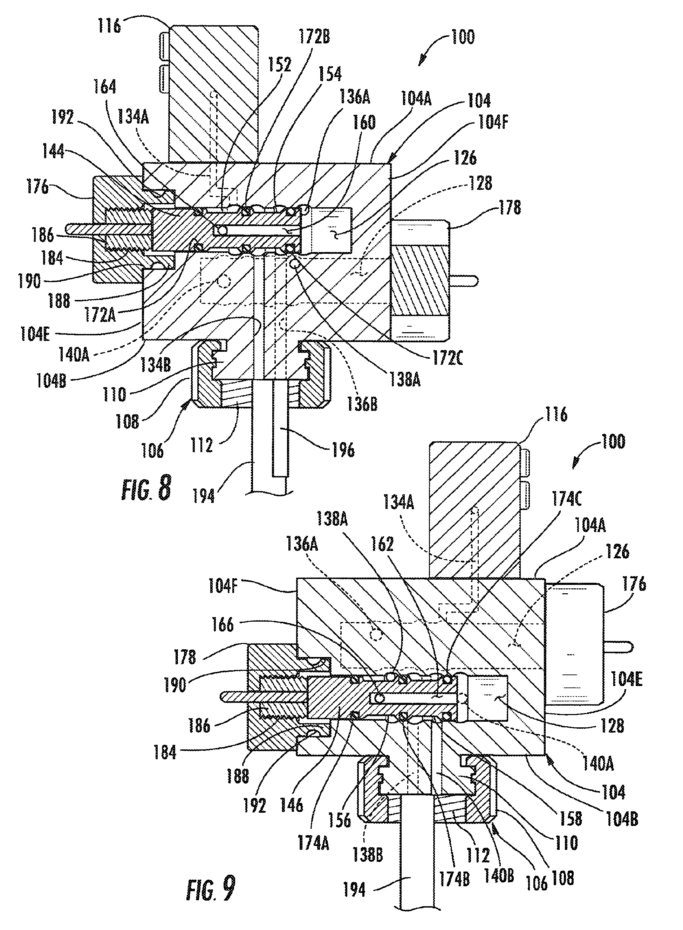

Both valve spools 144 and 146 are movable within their respective bore 126 and 128 relative to the housing 104. For example, the first valve spool 144 is axially moveable (independently of the second valve spool 146) within the first bore 126 between an open position (e.g., FIGS. 6 and 7, etc.) and a closed position (e.g., FIGS. 8 and 9, etc.). Through this movement, the first valve spool 144 controls movement of fluid through the housing 104 and through ports 134A and 134B and ports 136A and 136B (via the first bore 126). And the second valve spool 146 is axially moveable (independently of the first valve spool 144) within the second bore 128 between an open position (e.g., FIGS. 6 and 7, etc.) and a closed position (e.g., FIGS. 8 and 9, etc.). Through this movement, the second valve spool 146 controls movement of fluid through the housing 104 through ports 138A and 138B and ports 140A and 140B (via the second bore 128). Such operation of the valve assembly 100 will be described in more detail hereinafter.

In the illustrated embodiment, the first and second valve spools 144 and 146 are substantially similar in construction. For example, the first valve spool 144 includes a generally cylindrical outer surface with first and second annular grooves 152 and 154 (respectively) disposed in the outer surface and positioned axially therealong. The first annular groove 152 is relatively closer to a longitudinal center of the first valve spool 144, and the second annular groove 154 is relatively farther from the longitudinal center of the first valve spool 144. And the second valve spool 146 includes a generally cylindrical outer surface with first and second annular grooves 156 and 158 (respectively) disposed in the outer surface and positioned axially therealong. In addition, the first annular groove 156 is relatively closer to a longitudinal center of the second valve spool 146, and the second annular groove 158 is relatively farther from the longitudinal center of the second valve spool 146. As will be further described in connection with operation of the valve assembly 100, the first and second annular grooves 152 and 154 (respectively) of the first valve spool 144 allow for fluid communication between the first upper and lower ports 134A and 134B and between the second upper and lower ports 136A and 136B when the first valve spool 144 is in its open position (e.g., FIG. 6, etc.). And the first and second annular grooves 156 and 158 (respectively) of the second valve spool 146 allow for fluid communication between the third upper and lower ports 138A and 138B and between the fourth upper and lower ports 140A and 140B when the second valve spool 146 is in its open position (e.g., FIG. 7, etc.).

First and second bypasses 160 and 162 are formed in the respective first and second valve spools 144 and 146. The first bypass 160 generally defines a channel that extends through at least part of the first valve spool 144 generally from a first bypass aperture 164 located adjacent the first annular groove 152 to a longitudinal end of the first valve spool 144. The second bypass 162 also generally defines a channel that extends through at least part of the second valve spool 146, generally from a second bypass aperture 166 located adjacent the first annular groove 156 to a longitudinal end of the second valve spool 146. Thus, as will be further described in connection with operation of the valve assembly 100, the first bypass 160 fluidly couples the first upper port 134A and the second upper port 136A when the first valve spool 144 is in its closed position (e.g., FIG. 8, etc.). And the second bypass 162 fluidly couples the third upper port 138A and the fourth upper port 140A when the second valve spool 146 is in its closed position (e.g., FIG. 9, etc.).

O-rings 172A, 172B, and 172C and O-rings 174A, 174B, and 174C are distributed axially along the outer surfaces of the first and second valve spools 144 and 146 (respectively). The O-rings 172A, 172B, and 172C of the first valve spool 144 form seals between the valve spool 144 and the housing 104 by concurrent engagement of the valve spool 144 and the housing 104 within the first bore 126. And the O-rings 174A, 174B, and 174C of the second valve spool 146 form seals between the valve spool 146 and the housing 104 by concurrent engagement of the valve spool 146 and the housing 104 within the second bore 128.

Actuators 176 and 178 are provided for moving (e.g., sliding, etc.) the respective first and second valve spools 144 and 146 axially back and forth within the respective first and second bores 126 and 128 between their open (e.g., FIGS. 6 and 7, etc.) and closed (e.g., FIGS. 8 and 9, etc.) positions. In the illustrated embodiment, for example, a first actuator 176 is provided adjacent a third side surface 104E of the housing 104 for controlling movement of the first valve spool 144. And a second actuator 178 is provided adjacent a fourth side surface 104F of the housing 104 for controlling movement of the second valve spool 146. The first and second actuators 176 and 178 each include internal threads 184 that receive corresponding external threads 186 of the respective first and second valve spools 144 and 146. Accordingly, rotation of the first actuator 176 causes the first valve spool 144 to move axially (e.g., slide, etc.) in the first bore 126, and rotation of the second actuator 178 causes the second valve spool 146 to move axially (e.g., slide, etc.) in the second bore 128.

The first and second actuators 176 and 178 are each coupled to the housing 104 to allow rotation, but are each constrained against axial movement relative to the housing 104 (e.g., off the housing 104, etc.). In the illustrated embodiment, for example, the actuators each include a boss 188 configured (e.g., sized, shaped, constructed, etc.) to be received within a counterbore 190 formed in the housing 104. An annular groove 192 formed in the boss 188 aligns with a pair of pins (not shown) mounted in the housing 104 for constraining axial movement of the respective actuator 176 and 178 with respect to the housing 104.

The housing 104 and valve spools 144 and 146 of the illustrated embodiment are preferably made from an inert substance having a high resistance to chemical reaction and a low level of metals and other extractable contaminants. In one exemplary embodiment, for example, a housing is molded from a plastic material. In other exemplary embodiments, housings and valve spools comprise fully fluorinated polymers, such as PFA, TFE, PTFE, FEP, ETFE, or the like.

Operation of the valve assembly 100 will now be described with reference to FIGS. 1 and 6-9. In one exemplary mode of operation, the valve assembly 100 may be used to fill the container 102 with liquid, to bubble a carrier gas through the liquid, and to refill the container 102 with liquid if the liquid level drops below a desired level. In this mode of operation, the valve assembly 100 may initially be coupled to (e.g., threaded onto, etc.) the container 102 via the connector 106. As generally shown in FIG. 1, this locates the first, second, third, and fourth lower ports 134B, 136B, 138B, and 140B generally within the container 102. This in turn locates a sparging tube 194 (coupled to the third lower port 138B) and a receiving tube 196 (coupled to the second lower port 136B) within the container 102. A liquid supply line (not shown) may then be coupled to the first valve structure 116 for supplying liquid to the container 102, and a vent tube (not shown) may be coupled to the second valve structure 118 for use in relieving excess pressure in the container 102 (e.g., excess vapors associated with filling the container 102 with liquid, etc.). Further a carrier gas supply line (not shown) may be coupled to the third valve structure 120 for supplying carrier gas to the container 102, and a product transfer line (not shown) may be coupled to the fourth valve structure 122 for receiving vapor product recovered by the carrier gas out of the container 102.

After coupling the valve assembly 100 to the container 102, and after coupling the lines to the valve assembly 100, the first and second actuators 176 and 178 may be selectively operated to move the respective first and second valve spools 144 and 146 between their open positions and their closed positions. For example, each of the illustrated actuators 176 and 178 may be rotated counterclockwise to move the respective valve spool 144 and 146 to its open position, and clockwise to move the respective valve spool 144 and 146 to its closed position. In addition, it should be appreciated that the first valve spool 144 may be moved between its first and second positions independently of the second valve spool 146, and that the second valve spool 146 may be moved between its first and second positions independently of the first valve spool 144.

In this exemplary mode of operation, to begin, the first valve spool 144 is initially moved to its open position (e.g., FIG. 6, etc.) such that liquid flows into the housing 104 from the liquid supply line through the first upper port 134A, through the first bore 126, through the first valve spool's first annular groove 152, through the first lower port 134B, and into the container 102. Excess vapor that forms within the container 102 (e.g., vapor associated with the liquid that may increase vapor pressure within the container 102 when filling the container 102, etc.) moves from the container 102 and into the housing 104 through the second lower port 136B (and receiving tube 196 coupled thereto), through the first bore 126, through the first valve spool's second annular groove 154, through the second upper port 136A, and out of the housing 104 through the second valve structure 118. This operation can effectively vent pressure from the container 102 while the container 102 is being filled with the liquid (and thus help maintain pressure within the container 102).

After the container 102 is filled with liquid to a desired level, the first valve spool 144 is moved to its closed position (e.g., FIG. 8, etc.) to stop the flow of fluid into the container 102. First and second O-rings 172A and 172B substantially seal the first lower port 134A from the first upper port 134B such that the first valve spool 144 inhibits movement of the liquid therebetween. And the second and third O-rings 172B and 172C substantially seal the second lower port 136B from the second upper port 136A. The first lower port 134B and the second lower port 136B are still in fluid communication within the housing 104 via the first valve spool's second annular groove 154, but the container 102 is otherwise sealed. In this position, any excess liquid in the housing 104 flows from the first upper port 134A, through the first bypass aperture 164, through the first bypass 160, and to the second upper port 136A for discharge from the housing 104 through the second valve structure 118.

After the first valve spool 144 is closed, the second valve spool 146 is moved to its open position (e.g., FIG. 7, etc.). Carrier gas flows from a gas supply into the housing 104 through the third upper port 138A (and third valve structure 120 coupled thereto), through the second bore 128, through the second valve spool's first annular groove 156, through the third lower port 138B, and into the liquid in the container 102 through the sparging tube 194. The liquid is vaporized in the carrier gas bubbles formed by injection of the carrier gas into the liquid. The carrier gas and vaporized product within the carrier gas then flow into the housing 104 through the fourth lower port 140B, through the second bore 128, through the second valve spool's second annular groove 158, through the fourth upper port 140A, and out of the housing 104 through the fourth valve structure 122 and product transfer line, which may direct the carrier gas and vapor product carried thereby to a desired secondary location. In addition, during this operation excess carrier gas in the container 102 may partition from the liquid and move upward through the second lower port 136B, into the first bore 126 (between the second and third O-rings 172B and 172C of the closed first valve spool 144), through the first valve spool's second annular groove 154, down the first lower port 134B, and back into the container 102. This may, for example, help flush any liquid residue from portions of the first and second lower ports 134B and 136B, first bore 126, and first valve spool 144 in preparation for subsequent operation (e.g., subsequent filling and/or refilling, etc.).

Once a desired amount of vapor product has been withdrawn from the container 102, the second valve spool 146 is moved to its closed position (e.g., FIG. 9, etc.) to stop the flow of carrier gas into the container 102. The first and second O-rings 174A and 174B substantially seal the third lower port 138B from the third upper port 138A such that the second valve spool 146 inhibits movement of the carrier gas therebetween. And the second and third O-rings 174B and 174C substantially seal the fourth lower port 140B from the fourth upper port 140A. The third lower port 138B and the fourth lower port 140B are still in fluid communication via the second valve spool's second annular groove 158, but the container 102 is otherwise sealed. Any excess carrier gas in the housing 104 may flow from the third upper port 138A, through the second bypass aperture 166, through the second bypass 162, and to the fourth upper port 140A for discharge from the housing 104 through the fourth valve structure 122. This may, for example, also help flush any vaporized products from portions of the second bore 128, second valve spool 146, fourth upper port gas 140A, and product transfer line in preparation for subsequent operation.

Alternatively in this exemplary mode of operation, if the liquid in the container 102 falls below a desired level, the second valve spool 146 may be moved to its closed position to stop movement of the carrier gas into the container 102. And the first valve spool 144 may then be moved to its open position to refill the container 102 with liquid for subsequent operation.

In another exemplary mode of operation, it is contemplated that the valve assembly 100 may be used for closed transfer of liquid out of the container 102. For example, in this exemplary mode of operation a gas supply line may be coupled to the second valve structure 118 at the second upper port 136A, and a liquid transfer line may be coupled to the first valve structure 116 at the first upper port 134A. The first valve spool 144 may then be moved to its open position, allowing gas from a gas supply to flow through the second upper port 136A, through the first bore 126, through the first valve spool's first annular groove 152, through the second lower port 136B, and into the container 102 to pressurize it. The displaced liquid in the container 102 then flows up the tube 194 (which is now acting as a dip tube) connected to the first lower port 134A, into the housing 104, through the first bore 126, through the first valve spool's second annular groove 154, through the first upper port 134A, and out of the housing 104 through the first valve structure 116 and liquid transfer line coupled thereto.

In another exemplary mode of operation, the container 102 may initially be filled with a liquid and the valve assembly 100 then coupled thereto for operation. Here, the valve assembly 100 may be used to refill the container 102 with liquid, for example, if the liquid in the container 102 falls below a desired level.

It should now be appreciated that valve assemblies of the present disclosure may, for example, operate to fill and/or refill containers with liquid independently of retrieving vapor products from the liquid within the containers. Moreover, such filling and/or refilling operation may be done without removing the valve assembly from the containers and may provide for extended operations of the valve assemblies. For example, operations such as filling and/or refilling liquid into containers and transporting vapor products retrieved from the liquid in the containers can be sequentially done without uncoupling valve assemblies from the containers between such operations. This may reduce risks of contaminating the liquid in the container and/or may reduce risks of exposing the liquid in the container to the atmosphere during such extended operations.

The foregoing description of the embodiments has been provided for purposes of illustration and description. It is not intended to be exhaustive or to limit the invention. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the invention, and all such modifications are intended to be included within the scope of the invention.
The following numbered paragraphs define particular embodiments of the present invention.
1. A valve assembly according to claim 1.
2. The valve assembly of paragraph 1, wherein the housing includes means for releasably coupling the housing to a container.
3. The valve assembly of paragraphs 1 or 2, wherein each of the two or more valve spools includes an outer surface and first and second annular grooves disposed in the outer surface and positioned axially along the respective valve spool.
4. The valve assembly of paragraph 1, 2 or 3, wherein the housing defines a first bore and a second bore, the first valve spool being received within the first bore and being axially movable generally along a longitudinal axis of the first bore, and the second valve spool being received within the second bore and being axially movable generally along a longitudinal axis of the second bore.
5. The valve assembly of paragraph 4, wherein the housing defines first and second ports in fluid communication with the first bore, the first port being configured to receive the liquid into the housing and transport the liquid to the first bore, the second port being configured to transport the excess vapor associated with the liquid away from the first bore for discharge from the housing.
6. The valve assembly of paragraph 5, wherein the housing defines third and fourth ports in fluid communication with the second bore, the third port being configured to receive the carrier gas into the housing and transport the carrier gas to the second bore, the fourth port being configured to transport the vapor product retrieved by the carrier gas away from the second bore for discharge from the housing.
7. The valve assembly of paragraph 6, wherein the first and second valve spools each include an outer surface, and first and second annular grooves disposed in the outer surface and positioned axially along each of the valve spools.
8. The valve assembly of paragraph 7, wherein the first valve spool is moveable between an open position and a closed position, and wherein:
   when the first valve spool is in the open position, the first port communicates with a corresponding first lower port through the first valve spool's first annular groove such that the liquid can move from the first port, through the first bore, and to the first lower port, and the second port communicates with a corresponding second lower port through the first valve spool's second annular groove such that the excess vapor associated with the liquid can move from the second lower port, through the first bore, and to the second port for discharge from the housing; and
   when the first valve spool is in the closed position, the first valve spool substantially inhibits movement of the liquid from the first port to the first lower port, and substantially inhibits movement of the excess vapor from the second lower port to the second port.
9. The valve assembly of paragraph 8, wherein the first valve spool defines a bypass extending at least partly through the first valve spool; and
   wherein when the first valve spool is in the closed position, the liquid can move from the first port, through the first valve spool's bypass, to the second port for discharge from the housing.
10. The valve assembly of paragraph 8, wherein the second valve spool is moveable between an open position and a closed position, and wherein:
   when the second valve spool is in the open position, the third port communicates with a corresponding third lower port through the second valve spool's first annular groove such that the carrier gas can move from the third port, through the second bore, and to the third lower port, and the fourth port communicates with a corresponding fourth lower port through the second valve spool's second annular groove such that the vapor product retrieved by the carrier gas can move from the fourth lower port, through the second bore, and to the fourth port for discharge from the housing; and
   when the second valve spool is in the closed position, the second valve spool substantially inhibits movement of the carrier gas from the third port to the third lower port, and substantially inhibits movement of the vapor product from the fourth lower port to the fourth port.
11. The valve assembly of paragraph 10, wherein the second valve spool defines a bypass extending at least partly through the second valve spool; and
   wherein when the second valve spool is in the closed position, the carrier gas can move from the third port, through the second valve spool's bypass, to the fourth port for discharge from the housing.
12. The valve assembly of paragraph 1, 2 or 3, in combination with a container, wherein the first valve spool is moveable to control movement of the liquid through the housing and into the container to fill and/or refill the container with the liquid and to control movement of the excess vapor associated with the liquid out of the container and through the housing for discharge from the housing, and wherein the second valve spool is moveable to control movement of the carrier gas through the housing and into the container for use in retrieving the vapor product from the liquid in the container and to control movement of the vapor product retrieved by the carrier gas out of the container and through the housing for discharge from the housing.
13. The valve assembly of paragraph 1, 2 or 3, wherein the first and second valve spools each include an outer surface, and first and second annular grooves disposed in the outer surface and positioned axially along each of the valve spools.
14. The valve assembly of paragraph 13, wherein the first and second valve spools each include a longitudinal channel extending at least partly through the respective valve spool.
15. The valve assembly of paragraph 1, 2 or 3, wherein the first and second valve spools are each generally elongate and generally cylindrical in shape, and wherein the first and second bores in which the first and second valve spools are respectively received are each generally tubular in shape.
16. The valve assembly of any one of paragraphs 1 through 15, further comprising a valve structure coupled to an upper surface of the housing for transporting liquid into the housing.
17. The valve assembly of any one of paragraphs 1 through 16, further comprising four or more valve structures coupled to the housing for receiving fluid into and/or discharging fluid from the housing.
18. The valve assembly of any one of paragraphs 1 through 17, wherein the two or more valve spools each include a longitudinal axis, and wherein the two or more valve spools are disposed at least partly within the housing such that the longitudinal axes of the two or more valve spools are generally parallel.
19. The valve assembly of any one of paragraphs 1 through 18, wherein the housing includes a molded plastic material.
20. A valve assembly according to claim 1 for coupling to a container and controlling movement of fluids into and/or out of the container, the valve assembly comprising:
   a housing;
   means for removably coupling the housing to a container;
   first and second longitudinal bores defined by the housing, each of the bores having a longitudinal axis;
   first and second liquid ports defined by the housing and in communication with the first bore;
   first and second excess vapor ports defined by the housing and in communication with the first bore;
   first and second carrier gas ports defined by the housing and in communication with the second bore;
   first and second vapor product ports defined by the housing and in communication with the second bore;
   a first valve spool disposed at least partly within the first bore for use in controlling movement of fluids through the first bore;
   a second valve spool disposed at least partly within the second bore for use in controlling movement of fluids through the second bore;
   a first actuator coupled to the first valve spool for sliding the first valve spool within the first bore in a direction generally parallel to the longitudinal axis of the fist bore; and
   a second actuator coupled to the second valve spool for sliding the second valve spool within the second bore in a direction generally parallel to the longitudinal axis of the second bore.
21. The valve assembly of paragraph 20, wherein the first liquid port is defined at least partly by an upper surface of the housing, and wherein the first excess vapor port, the first carrier gas port, and the first vapor product port are each defined at least partly by a side surface of the housing.
22. The valve assembly of paragraphs 20 or 21, wherein the first valve spool controls movement of a liquid through the housing from the first liquid port, through the first bore, and to the second liquid port for discharge from the housing into a container, and controls movement of excess vapor associated with the liquid through the housing from the second excess vapor port, through the first bore, and to the first excess vapor port for discharge from the housing; and
   wherein the second valve spool controls movement of a carrier gas through the housing from the first carrier gas port, through the second bore, and to the second carrier gas port for discharge from the housing into the container, and controls movement of a vapor product retrieved by the carrier gas through the housing from the second vapor product port, through the second bore, and to the second vapor product port for discharge from the housing.
23. The valve assembly of paragraphs 20, 21, or 22, wherein the first and second valve spools each include an outer surface, and first and second annular grooves disposed in the outer surface and positioned axially along each of the valve spools.
24. The valve assembly of paragraphs 20, 21, 22, or 23, wherein the first valve spool is moveable between an open position and a closed position, and wherein:
   when the first valve spool is in the open position, the first and second liquid ports communicate through the first valve spool's first annular groove such that the liquid can move from the first liquid port, through the first bore, and to the second liquid port for discharge from the housing into the container, and the first and second excess vapor ports communicate through the first valve spool's second annular groove such that the excess vapor associated with the liquid can move from the second excess vapor port, through the first bore, and to the first excess vapor port for discharge from the housing; and
   when the first valve spool is in the closed position, the first valve spool substantially inhibits movement of the liquid from the first liquid port to the second liquid port, and substantially inhibits movement of the excess vapor from the second excess vapor port to the first excess vapor port.
25. The valve assembly of paragraphs 20, 21, 22, 23, or 24, wherein the second valve spool is moveable between an open position and a closed position, and wherein:
   when the second valve spool is in the open position, the first and second carrier gas ports communicate through the second valve spool's first annular groove such that the carrier gas can move from the first charier gas port, through the second bore, and to the second carrier gas port, and the fist and second vapor product ports communicate through the second valve spool's second annular groove such that the vapor product retrieved by the carrier gas can move from the second vapor product port, through the second bore, and to the first vapor product port for discharge from the housing; and
   when the second valve spool is in the closed position, the second valve spool substantially inhibits movement of the carrier gas from the first carrier gas port to the second carrier gas port, and substantially inhibits movement of the vapor product from the second vapor product port to the first vapor product port.
26. The valve assembly of paragraphs 20, 21, 22, 23, 24, or 25, in combination with the container.
27. A method according to claim 12.
28. The method of paragraph 27, wherein filling and/or refilling liquid into the container can be done independently of transporting vapor products retrieved from the liquid in the container.

## Claims

1. A valve assembly (100) for releasably coupling to a container, the valve assembly (100) being operable to fill and/or refill the container with a liquid while venting excess vapor from the container associated with the liquid to relieve pressure in the container created by the liquid, the valve assembly (100) also being operable to introduce a carrier gas into the container for use in retrieving a vapor product from the liquid within the container, the valve assembly (100) comprising:
a housing (104);
two or more valve spools (144, 146) disposed at least partly within the housing (104);
wherein the two or more valve spools (144, 146) are independently moveable relative to the housing (104) to control movement through the housing (104) of a liquid, excess vapor associated with the liquid, a carrier gas, and a vapor product retrieved by the carrier gas; and
wherein the two or more valve spools (144, 146) include a first valve spool (144) and a second valve spool (146), the first valve spool (144) being moveable relative to the second valve spool (146) to control movement of the liquid through the housing (104) and to control movement of the excess vapor through the housing (104), and the second valve spool (146) being moveable relative to the first valve spool (144) to control movement of the carrier gas through the housing (104) and to control movement of the vapor product through the housing (104).

2. The valve assembly (100) of claim 1, wherein each of the two or more valve spools (144, 146) includes an outer surface and first and second annular grooves (152, 154, 156, 158) disposed in the outer surface and positioned axially along the respective valve spool.

3. The valve assembly (100) of claim 1, wherein the housing (104) defines a first bore (126) and a second bore (128), the first valve spool (144) being received within the first bore (126) and being axially movable generally along a longitudinal axis of the first bore (126), and the second valve spool (146) being received within the second bore (128) and being axially movable generally along a longitudinal axis of the second bore (128), and wherein the housing (104) defines first and second ports (134A, 136A) in fluid communication with the first bore (126), the first port (134A) being configured to receive the liquid into the housing (104) and transport the liquid to the first bore (126), the second port (136A) being configured to transport the excess vapor associated with the liquid away from the first bore (126) for discharge from the housing (104).

4. The valve assembly (100) of claim 3, wherein the housing (104) defines third and fourth ports (138A, 140A) in fluid communication with the second bore (128), the third port (138A) being configured to receive the carrier gas into the housing (104) and transport the carrier gas to the second bore (128), the fourth port (140A) being configured to transport the vapor product retrieved by the carrier gas away from the second bore (128) for discharge from the housing (104).

5. The valve assembly (100) of claim 4, wherein the first and second valve spools (144, 146) each include an outer surface, and first and second annular grooves (152, 154, 156, 158) disposed in the outer surface and positioned axially along each of the valve spools (144, 146); and wherein:
when the first valve spool (144) is in the open position, the first port (134A) communicates with a corresponding first lower port (134B) through the first valve spool's first annular groove (152) such that the liquid can move from the first port (134A), through the first bore (126), and to the first lower port (134B), and the second port (136A) communicates with a corresponding second lower port (136B) through the first valve spool's second annular groove (154) such that the excess vapor associated with the liquid can move from the second lower port (136B), through the first bore (126), and to the second port (136A) for discharge from the housing (104); and
when the first valve spool (144) is in the closed position, the first valve spool (144) substantially inhibits movement of the liquid from the first port (134A) to the first lower port (134B), and substantially inhibits movement of the excess vapor from the second lower port (136B) to the second port (136A).

6. The valve assembly (100) of claim 5, wherein the first valve spool (144) defines a bypass (160) extending at least partly through the first valve spool (144); and wherein when the first valve spool (144) is in the closed position, the liquid can move from the first port (134A), through the first valve spool's bypass (160), to the second port (136A) for discharge from the housing (104); or
wherein when the second valve spool (146) is in the open position, the third port (138A) communicates with a corresponding third lower port (138B) through the second valve spool's first annular groove (156) such that the carrier gas can move from the third port (138A), through the second bore (128), and to the third lower port (138B), and the fourth port (140A) communicates with a corresponding fourth lower port (140B) through the second valve spool's second annular groove (158) such that the vapor product retrieved by the carrier gas can move from the fourth lower port (140B), through the second bore (128), and to the fourth port (140A) for discharge from the housing (104); and when the second valve spool (146) is in the closed position, the second valve spool (146) substantially inhibits movement of the carrier gas from the third port (138A) to the third lower port (138B), and substantially inhibits movement of the vapor product from the fourth lower port (140B) to the fourth port (140A).

7. The valve assembly (100) of claim 1, in combination with a container (102), wherein the first valve spool (144) is moveable to control movement of the liquid through the housing (104) and into the container (102) to fill and/or refill the container (102) with the liquid and to control movement of the excess vapor associated with the liquid out of the container (102) and through the housing (104) for discharge from the housing (104), and wherein the second valve spool (146) is moveable to control movement of the carrier gas through the housing (104) and into the container (102) for use in retrieving the vapor product from the liquid in the container (102) and to control movement of the vapor product retrieved by the carrier gas out of the container (102) and through the housing (104) for discharge from the housing (104).

8. The valve assembly (100) of claim 1, wherein the first and second valve spools (144, 146) each include an outer surface, and first and second annular grooves (152, 154, 156, 158) disposed in the outer surface and positioned axially along each of the valve spools (144, 146); and wherein the first and second valve spools (144, 146) each include a longitudinal channel (160, 162) extending at least partly through the respective valve spool.

9. The valve assembly (100) of claim 3, wherein the first and second valve spools (144, 146) are each generally elongate and generally cylindrical in shape, and wherein the first and second bores (126, 128) in which the first and second valve spools (144, 146) are respectively received are each generally tubular in shape.

10. The valve assembly (100) of any one of claims 1 through 9, further comprising:
a valve structure (116) coupled to an upper surface (104A) of the housing (104) for transporting liquid into the housing (104); or
four or more valve structures (116, 118, 120, 122) coupled to the housing (104) for receiving fluid into and/or discharging fluid from the housing (104).

11. The valve assembly (100) of any one of claims 1 through 10, wherein the two or more valve spools (144, 146) each include a longitudinal axis, and wherein the two or more valve spools (144, 146) are disposed at least partly within the housing (104) such that the longitudinal axes of the two or more valve spools (144, 146) are generally parallel.

12. A method for filling and/or refilling liquid into a container (102) and transporting vapor products retrieved from the liquid out of the container (102) while reducing risks of contaminating the liquid and/or exposing the liquid to the atmosphere during operation, the method comprising:
removably coupling a valve assembly (100) to the container (102);
filling and/or refilling liquid into the container (102) through the valve assembly (100);
transporting vapor products retrieved from the liquid in the container (102) through the valve assembly (100) for discharge from the valve assembly (100);
wherein the actions of filling and/or refilling liquid into the container (102) and transporting vapor products retrieved from the liquid in the container (102) can be sequentially done without uncoupling the valve assembly (100) from the container (102) between said actions;
wherein the action of filling and/or refilling liquid into the container (102) includes moving a first valve spool (144) of the valve assembly (100) to an open position to allow liquid to flow into the container (102) and to allow excess vapor within the container (102) associated with the liquid to flow out of the container (102) for relieving pressure within the container (102); and
wherein the action of transporting vapor products retrieved from the liquid in the container (102) includes moving a second valve spool (146) of the valve assembly (100) to an open position to allow carrier gas to flow into the container (102) to retrieve vapor products from the liquid in the container (102) and to allow the carrier gas and vapor products to flow out of the container (102) for subsequent discharge.

13. The method of claim 12, wherein filling and/or refilling liquid into the container (102) can be done independently of transporting vapor products retrieved from the liquid in the container (102).

## Patentansprüche

1. Ventilanordnung (100) zum lösbaren Ankoppeln an ein Behältnis, wobei die Ventilanordnung (100) verwendbar ist zum Füllen und/oder Nachfüllen des Behältnisses mit einer Flüssigkeit, mit gleichzeitigem Ablassen von mit der Flüssigkeit in Zusammenhang stehendem überschüssigen Dampf aus dem Behältnis, um durch die Flüssigkeit gebildeten Druck aus dem Behältnis abzulassen, wobei die Ventilanordnung (100) auch verwendbar ist zum Einführen eines Schleppgases in das Behältnis zur Verwendung beim Einfangen eines Dampfprodukts aus der Flüssigkeit innerhalb des Behältnisses, die Ventilanordnung (100) umfassend
ein Gehäuse (104);
zwei oder mehr mindestens teilweise im Gehäuse (104) angeordnete Ventilkolben (144, 146);
wobei die zwei oder mehr Ventilkolben (144, 146) unabhängig gegenüber dem Gehäuse (104) beweglich sind, zum Steuern von Bewegung einer Flüssigkeit, überschüssigen Dampfes in Zusammenhang mit der Flüssigkeit, eines Schleppgases und eines vom Schleppgas eingefangenen Dampfprodukts durch das Gehäuse (104); und
wobei die zwei oder mehr Ventilkolben (144, 146) einen ersten Ventilkolben (144) und einen zweiten Ventilkolben (146) enthalten, wobei der erste Ventilkolben (144) gegenüber dem zweiten Ventilkolben (146) beweglich ist, zum Steuern von Bewegung der Flüssigkeit durch das Gehäuse (104) und zum Steuern von Bewegung des überschüssigen Dampfes durch das Gehäuse (104), und der zweite Ventilkolben (146) gegenüber dem ersten Ventilkolben (144) beweglich ist zum Steuern von Bewegung des Schleppgases durch das Gehäuse (104) und zum Steuern von Bewegung des Dampfprodukts durch das Gehäuse (104).

2. Ventilanordnung (100) gemäß Anspruch 1, wobei jeder der zwei oder mehr Ventilkolben (144, 146) eine äußere Oberfläche aufweist und erste und zweite in der äußeren Oberfläche befindliche und axial entlang dem jeweiligen Ventilkolben angeordnete ringförmige Einbuchtungen (152, 154, 156, 158).

3. Ventilanordnung (100) gemäß Anspruch 1, wobei das Gehäuse (104) ein erstes Bohrloch (126) und ein zweites Bohrloch (128) definiert, wobei der erste Ventilkolben (144) innerhalb des ersten Bohrlochs (126) aufgenommen wird und axial im Wesentlichen entlang einer Längsachse des ersten Bohrlochs (126) beweglich ist, und der zweite Ventilkolben (146) innerhalb des zweiten Bohrlochs (128) aufgenommen wird und axial im Wesentlichen entlang einer Längsachse des zweiten Bohrlochs (128) beweglich ist, und wobei das Gehäuse (104) einen ersten und einen zweiten Anschluss (134A, 136A) in flüssiger Verbindung mit dem ersten Bohrloch (126) definiert, wobei der erste Anschluss (134A) so ausgestaltet ist, dass er die Flüssigkeit in das Gehäuse (104) aufnehmen und die Flüssigkeit zum ersten Bohrloch (126) transportieren kann, wobei der zweite Anschluss (136A) so ausgestaltet ist, dass er den überschüssigen Dampf in Zusammenhang mit der Flüssigkeit weg vom ersten Bohrloch (126) zur Ableitung aus dem Gehäuse (104) transportieren kann.

4. Ventilanordnung (100) gemäß Anspruch 3, wobei das Gehäuse (104) einen dritten und einen vierten Anschluss (138A, 140A) in flüssiger Verbindung mit dem zweiten Bohrloch (128) definiert, wobei der dritte Anschluss (138A) so ausgestaltet ist, dass er das Schleppgas in das Gehäuse (104) aufnehmen und das Schleppgas zum zweiten Bohrloch (128) transportieren kann, wobei der vierte Anschluss (140A) so ausgestaltet ist, dass er das vom Schleppgas eingefangene Dampfprodukt weg vom zweiten Bohrloch (128) zur Ableitung aus dem Gehäuse (104) transportieren kann.

5. Ventilanordnung (100) gemäß Anspruch 4, wobei der erste und der zweite Ventilkolben (144, 146) jeweils eine äußere Oberfläche aufweisen und erste und zweite an der äußeren Oberfläche befindliche und axial entlang dem jeweiligen Ventilkolben (144, 146) angeordnete ringförmige Einbuchtungen (152, 154, 156, 158); und wobei
ist der erste Ventilkolben (144) in der geöffneten Stellung, der erste Anschluss (134A) mit einem entsprechenden ersten unteren Anschluss (134B) über die erste ringförmige Einbuchtung (152) des ersten Ventilkolbens in Verbindung steht, so dass die Flüssigkeit sich vom ersten Anschluss (134A), durch das erste Bohrloch (126) und zum ersten unteren Anschluss (134B) bewegen kann, und der zweite Anschluss (136A) mit einem entsprechenden zweiten unteren Anschluss (136B) über die zweite ringförmige Einbuchtung (154) des ersten Ventilkolbens in Verbindung steht, so dass der überschüssige Dampf in Zusammenhang mit der Flüssigkeit sich vom zweiten unteren Anschluss (136B), durch das erste Bohrloch (126) und zum zweiten Anschluss (136A) bewegen kann zur Ableitung aus dem Gehäuse (104); und
ist der erste Ventilkolben (144) in der geschlossenen Stellung, der erste Ventilkolben (144) im Wesentlichen Bewegung der Flüssigkeit vom ersten Anschluss (134A) zum ersten unteren Anschluss (134B) verhindert, und im Wesentlichen Bewegung des überschüssigen Dampfs vom zweiten unteren Anschluss (136B) zum zweiten Anschluss (136A) verhindert.

6. Ventilanordnung (100) gemäß Anspruch 5, wobei der erste Ventilkolben (144) einen Druckausgleicher (160) bildet, der sich mindestens teilweise durch den ersten Ventilkolben (144) erstreckt; und wobei, ist der erste Ventilkolben (144) in der geschlossenen Stellung, sich die Flüssigkeit vom ersten Anschluss (134A) durch den Druckausgleicher (160) des ersten Ventilkolbens zum zweiten Anschluss (136A) für die Ableitung aus dem Gehäuse (104) bewegen kann; oder;
wobei, ist der zweite Ventilkolben (146) in der geöffneten Stellung, der dritte Anschluss (138A) mit einem entsprechenden dritten unteren Anschluss (138B) über die erste ringförmige Einbuchtung (156) des zweiten Ventilkolbens in Verbindung steht, so dass das Schleppgas sich vom dritten Anschluss (138A) durch das zweite Bohrloch (128) und zum dritten unteren Anschluss (138B) bewegen kann, und der vierte Anschluss (140A) mit einem entsprechenden vierten unteren Anschluss (140B) über die zweite ringförmige Einbuchtung (158) des zweiten Ventilkolbens in Verbindung steht, so dass das vom Schleppgas eingefangene Dampfprodukt sich vom vierten unteren Anschluss (140B) durch das zweite Bohrloch (128) und zum vierten Anschluss (140A) zur Ableitung aus dem Gehäuse (104) bewegen kann; und, ist der zweite Ventilkolben (146) in der geschlossenen Stellung, der zweite Ventilkolben (146) im Wesentlichen Bewegung des Schleppgases vom dritten Anschluss (138A) zum dritten unteren Anschluss (138B) verhindert, und im Wesentlichen Bewegung des Dampfprodukts vom vierten unteren Anschluss (140B) zum vierten Anschluss (140A) verhindert.

7. Ventilanordnung (100) gemäß Anspruch 1, in Kombination mit einem Behältnis (102), wobei der erste Ventilkolben (144) beweglich ist zum Steuern von Bewegung der Flüssigkeit durch das Gehäuse (104) in das Behältnis (102) zum Füllen und/oder Nachfüllen des Behältnisses (102) mit der Flüssigkeit und zum Steuern von Bewegung des überschüssigen Dampfes in Zusammenhang mit der Flüssigkeit aus dem Behältnis (102) und durch das Gehäuse (104) zur Ableitung aus dem Gehäuse (104), und wobei der zweite Ventilkolben (146) beweglich ist zum Steuern von Bewegung des Schleppgases durch das Gehäuse (104) und in das Behältnis (102) zur Verwendung zum Einfangen des Dampfprodukts aus der Flüssigkeit im Behältnis (102) und zum Steuern von Bewegung des vom Schleppgas eingefangenen Dampfprodukts aus dem Behältnis (102) hinaus und durch das Gehäuse (104) zur Ableitung aus dem Gehäuse (104).

8. Ventilanordnung (100) gemäß Anspruch 1, wobei der erste und der zweite Ventilkolben (144, 146) jeweils eine äußere Oberfläche aufweisen und erste und zweite an der äußeren Oberfläche befindliche und axial entlang dem jeweiligen Ventilkolben (144, 146) angeordnete ringförmige Einbuchtungen (152, 154, 156, 158); und wobei der erste und der zweite Ventilkolben (144, 146) jeweils einen Längskanal (160, 162) aufweisen, der sich mindestens teilweise durch den entsprechenden Ventilkolben erstreckt.

9. Ventilanordnung (100) gemäß Anspruch 3, wobei der erste und der zweite Ventilkolben (144, 146) jeweils im Allgemeinen länglich sind und im Allgemeinen eine zylindrische Form haben, und wobei das erste und das zweite Bohrloch (126, 128) in welche der erste und der zweite Ventilkolben (144, 146) jeweils aufgenommen werden, im Allgemeinen eine röhrenförmige Form haben.

10. Ventilanordnung (100) gemäß irgendeinem der Ansprüche 1 bis 9, zudem umfassend
einen an eine obere Oberfläche (104A) des Gehäuses (104) angekoppelten Ventilaufbau (116) zum Transportieren von Flüssigkeit in das Gehäuse (104); oder
vier oder mehr an das Gehäuse (104) angekoppelte Ventilaufbaue (116, 118, 120, 122) zum Aufnehmen von Fluid in das und/oder Ableiten von Fluid aus dem Gehäuse (104).

11. Ventilanordnung (100) gemäß irgendeinem der Ansprüche 1 bis 10, wobei die zwei oder mehr Ventilkolben (144, 146) jeweils eine Längsachse aufweisen, und wobei die zwei oder mehr Ventilkolben (144, 146) mindestens teilweise innerhalb des Gehäuses (104) angeordnet sind, so dass die Längsachsen der zwei oder mehr Ventilkolben (144, 146) im Wesentlichen parallel sind.

12. Verfahren zum Füllen und/oder Nachfüllen von Flüssigkeit in ein Behältnis (102) und zum Transportieren von aus der Flüssigkeit eingefangenen Dampfprodukten aus dem Behältnis (102), während die Gefahren der Kontamination der Flüssigkeit und/oder des Aussetzens der Flüssigkeit der Atmosphäre beim Betrieb verringert werden, das Verfahren umfassend
lösbares Ankoppeln der Ventilanordnung (100) an das Behältnis (102); Füllen und/oder Nachfüllen von Flüssigkeit durch die Ventilanordnung (100) in das Behältnis (102);
Transportieren von aus der Flüssigkeit eingefangenen Dampfprodukten durch die Ventilanordnung (100) in das Behältnis (102) zum Ableiten aus der Ventilanordnung (100);
wobei die Arbeitsschritte des Füllens und/oder Nachfüllens von Flüssigkeit in das Behältnis (102) und des Transportierens von aus der Flüssigkeit eingefangenen Dampfprodukten in das Behältnis (102) nacheinander erfolgen können, ohne zwischen den Arbeitsschritten die Ventilanordnung (100) vom Behältnis (102) abzukoppeln;
wobei der Arbeitsschritt des Füllens und/oder Nachfüllens von Flüssigkeit in das Behältnis (102) enthält Bewegen eines ersten Ventilkolbens (144) der Ventilanordnung (100) in eine geöffnete Stellung, damit Flüssigkeit in das Behältnis (102) fließen kann und überschüssiger Dampf innerhalb des Behältnisses (102) in Zusammenhang mit der Flüssigkeit aus dem Behältnis (102) fließen kann, um Druck aus dem Behältnis (102) abzulassen; und
wobei der Arbeitsschritt des Transportierens von aus der Flüssigkeit eingefangenen Dampfprodukten in das Behältnis (102) enthält Bewegen eines zweiten Ventilkolbens (146) der Ventilanordnung (100) in eine geöffnete Stellung, damit Schleppgas in das Behältnis (102) fließen kann zum Einfangen von Dampfprodukten aus der Flüssigkeit im Behältnis (102) und damit das Schleppgas und die Dampfprodukte für anschließendes Ableiten aus dem Behältnis (102) fließen können.

13. Verfahren gemäß Anspruch 12, wobei Füllen und/oder Nachfüllen von Flüssigkeit in das Behältnis (102) unabhängig von Transportieren von aus der Flüssigkeit eingefangenen Dampfprodukten in das Behältnis (102) ausgeführt werden kann.

## Revendications

1. Ensemble de soupape (100) pour le raccordement libérable à un récipient, l'ensemble de soupape (100) pouvant opérer pour remplir et/ou re-remplir le récipient d'un liquide tout en purgeant l'excès de vapeur du récipient associé au liquide afin de réduire la pression dans le récipient créée par le liquide, l'ensemble de soupape (100) pouvant également opérer pour introduire un gaz porteur dans le récipient destiné à être utilisé dans la récupération d'un produit de vapeur du liquide au sein du récipient, l'ensemble de soupape (100) comprenant :
un logement (104) ;
deux bagues de soupape (144, 146) ou plus disposées au moins partiellement au sein du logement (104) ;
dans lequel les deux bagues de soupape (144, 146) ou plus sont indépendamment mobiles par rapport au logement (104) pour commander le mouvement à travers le logement (104) d'un liquide, d'un excès de vapeur associé au liquide, d'un gaz porteur et d'un produit de vapeur récupéré par le gaz porteur ; et
dans lequel les deux bagues de soupape (144, 146) ou plus incluent une première bague de soupape (144) et une seconde bague de soupape (146), la première bague de soupape (144) étant mobile par rapport à la seconde bague de soupape (146) pour commander le mouvement du liquide à travers le logement (104) et pour commander le mouvement de l'excès de vapeur à travers le logement (104), et la seconde bague de soupape (146) étant mobile par rapport à la première bague de soupape (144) pour commander le mouvement du gaz porteur à travers le logement (104) et pour commander le mouvement du produit de vapeur à travers le logement (104).

2. Ensemble de soupape (100) selon la revendication 1, dans lequel chacune des deux bagues de soupape (144, 146) ou plus inclut une surface externe et des première et seconde rainures annulaires (152, 154, 156, 158) disposées dans la surface externe et positionnées de manière axiale le long de la bague de soupape respective.

3. Ensemble de soupape (100) selon la revendication 1, dans lequel le logement (104) définit un premier alésage (126) et un second alésage (128), la première bague de soupape (144) étant reçue au sein du premier alésage (126) et étant mobile de manière axiale généralement le long d'un axe longitudinal du premier alésage (126), et la seconde bague de soupape (146) étant reçue au sein du second alésage (128) et étant mobile de manière axiale généralement le long d'un axe longitudinal du second alésage (128), et dans lequel le logement (104) définit des premier et deuxième orifices (134A, 136A) en communication fluidique avec le premier alésage (126), le premier orifice (134A) étant configuré pour recevoir le liquide dans le logement (104) et transporter le liquide vers le premier alésage (126), le deuxième orifice (136A) étant configuré pour transporter l'excès de vapeur associé au liquide à l'écart du premier alésage (126) pour une évacuation du logement (104).

4. Ensemble de soupape (100) selon la revendication 3, dans lequel le logement (104) définit des troisième et quatrième orifices (138A, 140A) en communication fluidique avec le second alésage (128), le troisième orifice (138A) étant configuré pour recevoir le gaz porteur dans le logement (104) et transporter le gaz porteur vers le second alésage (128), le quatrième orifice (140A) étant configuré pour transporter le produit de vapeur récupéré par le gaz porteur à l'écart du second alésage (128) pour une évacuation du logement (104).

5. Ensemble de soupape (100) selon la revendication 4, dans lequel les première et seconde bagues de soupape (144, 146) incluent chacune une surface externe et des première et seconde rainures annulaires (152, 154, 156, 158) disposées dans la surface externe et positionnées de manière axiale le long de chacune des bagues de soupape (144, 146) ; et dans lequel :
lorsque la première bague de soupape (144) est dans la position ouverte, le premier orifice (134A) communique avec un premier orifice inférieur correspondant (134B) à travers la première rainure annulaire (152) de la première bague de soupape de sorte que le liquide peut se déplacer du premier orifice (134A) à travers le premier alésage (126) et vers le premier orifice inférieur (134B), et le second orifice (136A) communique avec un second orifice inférieur correspondant (136B) à travers la seconde rainure annulaire (154) de la première bague de soupape de sorte que l'excès de vapeur associé au liquide peut se déplacer du second orifice inférieur (136B) à travers le premier alésage (126) et vers le second orifice (136A) pour une évacuation du logement (104) ; et
lorsque la première bague de soupape (144) est dans la position fermée, la première bague de soupape (144) inhibe essentiellement le mouvement du liquide du premier orifice (134A) vers le premier orifice inférieur (134B) et inhibe essentiellement le mouvement de l'excès de vapeur du second orifice inférieur (136B) vers le second orifice (136A).

6. Ensemble de soupape (100) selon la revendication 5, dans lequel la première bague de soupape (144) définit une dérivation (160) s'étendant au moins partiellement à travers la première bague de soupape (144) ; et dans lequel, lorsque la première bague de soupape (144) est dans la position fermée, le liquide peut se déplacer du premier orifice (134A) à travers la dérivation (160) de la première bague de soupape vers le second orifice (136A) pour une évacuation du logement (104) ; ou
dans lequel, lorsque la seconde bague de soupape (146) est dans la position ouverte, le troisième orifice (138A) communique avec un troisième orifice inférieur correspondant (138B) à travers la première rainure annulaire (156) de la seconde bague de soupape de sorte que le gaz porteur peut se déplacer du troisième orifice (138A) à travers le second alésage (128) et vers le troisième orifice inférieur (138B), et le quatrième orifice (140A) communique avec un quatrième orifice inférieur correspondant (140B) à travers la seconde rainure annulaire (158) de la seconde bague de soupape de sorte que le produit de vapeur récupéré par le gaz porteur peut se déplacer du quatrième orifice inférieur (140B) à travers le second alésage (128) et vers le quatrième orifice (140A) pour une évacuation du logement (104) ; et lorsque la seconde bague de soupape (146) est dans la position fermée, la seconde bague de soupape (146) inhibe essentiellement le mouvement du gaz porteur du troisième orifice (138A) vers le troisième orifice inférieur (138B) et inhibe essentiellement le mouvement du produit de vapeur du quatrième orifice inférieur (140B) vers le quatrième orifice (140A).

7. Ensemble de soupape (100) selon la revendication 1, en combinaison avec un récipient (102), dans lequel la première bague de soupape (144) est mobile pour commander le mouvement du liquide à travers le logement (104) et dans le récipient (102) pour remplir et/ou re-remplir le récipient (102) du liquide et pour commander le mouvement de l'excès de vapeur associé au liquide hors du récipient (102) et à travers le logement (104) pour une évacuation du logement (104), et dans lequel la seconde bague de soupape (146) est mobile pour commander le mouvement du gaz porteur à travers le logement (104) et dans le récipient (102) destiné à être utilisé dans la récupération du produit de vapeur du liquide dans le récipient (102) et pour commander le mouvement du produit de vapeur récupéré par le gaz porteur hors du récipient (102) et à travers le logement (104) pour une évacuation du logement (104).

8. Ensemble de soupape (100) selon la revendication 1, dans lequel les première et seconde bagues de soupape (144, 146) incluent chacune une surface externe et des première et seconde rainures annulaires (152, 154, 156, 158) disposées dans la surface externe et positionnées de manière axiale le long de chacune des bagues de soupape (144, 146) ; et dans lequel les première et seconde bagues de soupape (144, 146) incluent chacune un canal longitudinal (160, 162) s'étendant au moins partiellement à travers la bague de soupape respective.

9. Ensemble de soupape (100) selon la revendication 3, dans lequel les première et seconde bagues de soupape (144, 146) sont chacune de forme généralement allongée et généralement cylindrique, et dans lequel les premier et second alésages (126, 128) dans lesquels les première et seconde bagues de soupape (144, 146) sont respectivement reçues sont chacun de forme généralement tubulaire.

10. Ensemble de soupape (100) selon l'une quelconque des revendications 1 à 9, comprenant en outre :
une structure de soupape (116) raccordée à une surface supérieure (104A) du logement (104) pour transporter du liquide dans le logement (104) ; ou
quatre structures de soupape (116, 118, 120, 122) ou plus raccordées au logement pour recevoir du fluide dans le et/ou évacuer du fluide du logement (104).

11. Ensemble de soupape (100) selon l'une quelconque des revendications 1 à 10, dans lequel les deux bagues de soupape (144, 146) ou plus incluent chacune un axe longitudinal, et dans lequel les deux bagues de soupape (144, 146) ou plus sont disposées au moins partiellement au sein du logement (104) de sorte que les axes longitudinaux des deux bagues de soupape (144, 146) ou plus sont généralement parallèles.

12. Procédé de remplissage et/ou de re-remplissage de liquide dans un récipient (102) et de transport de produits de vapeur récupérés du liquide en dehors du récipient (102) tout en réduisant les risques de contamination du liquide et/ou d'exposition du liquide à l'atmosphère au cours de l'opération, le procédé comprenant :
le raccordement amovible d'un ensemble de soupape (100) au récipient (102) ;
le remplissage et/ou le re-remplissage de liquide dans le récipient (102) à travers l'ensemble de soupape (100) ;
le transport de produits de vapeur récupérés du liquide dans le récipient (102) à travers l'ensemble de soupape (100) pour une évacuation de l'ensemble de soupape (100) ;
dans lequel les actions de remplissage et/ou de re-remplissage de liquide dans le récipient (102) et de transport de produits de vapeur récupérés du liquide dans le récipient (102) peuvent être effectuées de manière séquentielle sans déconnecter l'ensemble de soupape (100) du récipient (102) entre lesdites actions ;
dans lequel l'action de remplissage et/ou de re-remplissage de liquide dans le récipient (102) inclut le déplacement d'une première bague de soupape (144) de l'ensemble de soupape (100) vers une position ouverte pour permettre à du liquide de s'écouler dans le récipient (102) et pour permettre à de l'excès de vapeur au sein du récipient (102) associé au liquide de s'écouler hors du récipient (102) pour réduire la pression au sein du récipient (102) ; et
dans lequel l'action de transport de produits de vapeur récupérés du liquide en dans le récipient (102) inclut le déplacement d'une seconde bague de soupape (146) de l'ensemble de soupape (100) vers une position ouverte pour permettre à du gaz porteur de s'écouler dans le récipient (102) afin de récupérer des produits de vapeur du liquide dans le récipient (102) et de permettre au gaz porteur et aux produits de vapeur de s'écouler hors du récipient (102) pour une évacuation subséquente.

13. Procédé selon la revendication 12, dans lequel le remplissage et/ou le re-remplissage de liquide dans le récipient (102) peut être effectué indépendamment du transport de produits de vapeur récupérés du liquide dans le récipient (102).
